# EUROPEAN PATENT SPECIFICATION

(11) **EP 3 916 261 B1**
(45) Date of publication and mention of the grant of the patent: **28.12.2022**
(21) Application number: 21170072.9
(22) Date of filing: 23.04.2021
(51) Int. Cl.: F16D 55/224, B61H 5/00

(54) **BRAKE DEVICE AND GAP ADJUSTING MECHANISM FOR BRAKE DEVICE**
BREMSVORRICHTUNG UND SPALTVERSTELLMECHANISMUS FÜR EINE BREMSVORRICHTUNG
DISPOSITIF DE FREINAGE ET MÉCANISME DE RÉGLAGE D'ESPACE POUR DISPOSITIF DE FREINAGE

(30) Priority: 26.05.2020 JP 2020091658
(43) Date of publication of application: 01.12.2021
(73) Proprietor: Nabtesco Corporation, Tokyo 102-0093 (JP)
(72) Inventor: OHNO, Tomoya, Tokyo 102-0093 (JP)
(74) Representative: Grünecker Patent- und Rechtsanwälte PartG mbB

(56) References cited:
- WO-A1-2011/095423
- US-A- 6 112 861
- US-A1- 2018 058 527

## Description

The present invention relates to a brake device and a gap adjusting mechanism for a brake device.

International Publication No. WO 2011/095423 ("the '423 Publication") discloses a disc brake device for use in railroad vehicles. The brake device includes a pair of rotating arms for sandwiching a disc fixedly attached to an axle. Each of the rotating arms has at a tip end portion thereof an attaching portion mounted thereto. A brake pad is fixedly attached to the attaching portion. Between the brake pads supported on the tip end portions of the rotating arms, the disc rotatable with a wheel is provided. Between the base end portions of the rotating arms, a gap adjusting mechanism for adjusting the distance between the disc and the brake pads is provided. The gap adjusting mechanism is coupled to the base end portion of each of the rotating arms. One of the rotating arms is coupled to a piston provided within a cylinder, and the pair of rotating arms is rotated by a driving force provided from the piston, which is to be driven by an air pressure. In the brake device disclosed in the '423 Publication, as the rotating arms rotate, the brake pads supported on the tip end portions of the rotating arms touch the disc. As the brake pads touch the disc, they gradually wear off. This increases the distance between the brake pads and the disc.

The gap adjusting mechanism provided in the brake device disclosed in the '423 Publication includes a male screw part having external threads and positioned between the base end portions of the rotating arms and a tubular female screw part having internal threads and for receiving the male screw part. If the piston moves by a predetermined distance or more, the driving force provided from the piston can be transferred to the female screw part of the gap adjusting mechanism. The driving force provided from the piston rotates the female screw part relative to the male screw part in a certain direction, so that the distance between the base end portions of the rotating arms increases. This in turn decreases the distance between the tip end portions of the rotating arms, so that the distance between the disc and the brake pads decreases.

US 2018/058527 A1 discloses a brake device with a pair of rotating arms and a gap adjusting mechanism. The gap adjusting mechanism has a male screw portion, a female screw portion and an input member.

In the gap adjusting mechanism provided in the brake device disclosed in the '423 Publication, the reaction force resulting from the braking applied by the brake device, the vibration of the railroad vehicles and other factors may apply such a force to the female screw part that the female screw part is rotated relative to the male screw part in the opposite direction. If the female screw part is rotated relative to the male screw part in the opposite direction, the distance between the base end portions of the rotating arms may possibly decrease. This may in turn change the distance between the disc and the brake pads.

The present invention is made in light of the above and is designed to prevent an unexpected reduction in the distance between the base end portions of the rotating arms.

To solve the above problems, a brake device according to claim 1 is provided. In accordance with one aspect of the present invention, provided is a brake device that includes a pair of rotating arms, where the rotating arms each have a friction member attached on a tip end portion thereof, where the friction members are configured to sandwich a brake disc when at least one of the rotating arms rotates, and a gap adjusting mechanism connected to base end portions of the rotating arms that are positioned opposite to the tip end portions, where each of the rotating arms has a rotation center between the base and tip end portions thereof, where the gap adjusting mechanism is configured to adjust a distance between the base end portions of the rotating arms. The gap adjusting mechanism includes a male screw portion, a female screw portion for receiving the male screw portion fitted therein, and an input member for allowing a force fed from a piston provided within a cylinder to rotate a first one of the male screw portion and the female screw portion relative to a second one of the male screw portion and the female screw portion in one direction. When the first one of the male screw portion and the female screw portion rotates relative to the second one of the male screw portion and the female screw portion in the one direction, the distance between the base end portions of the rotating arms increases. The gap adjusting mechanism further includes a one-way clutch for allowing the first one of the male screw portion and the female screw portion to rotate relative to the second one of the male screw portion and the female screw portion in the one direction and preventing the first one of the male screw portion and the female screw portion from rotating relative to the second one of the male screw portion and the female screw portion in the other direction.

The above design can prevent a reduction in the distance between the base end portions of the rotating arms even if vibration or other factors may apply a force such that the first one of the male screw portion and the female screw portion rotates relative to the second one of the male screw portion and the female screw portion in the other direction.

The brake device described above includes a holder member holding the first one of the male screw portion and the female screw portion and being fixedly attached to one of the rotating arms. The one-way clutch is interposed between the first one of the male screw portion and the female screw portion and the holder member.

In the brake device described above, the first one of the male screw portion and the female screw portion has a protrusion protruding radially outside, and the protrusion has a contact surface facing a contact-target surface of the holder member and being configured to contact the contact-target surface of the holder member in an axial direction of the male and female screw portions.

In the brake device described above, the holder member has a first accommodating space for accommodating the one-way clutch therein and a second accommodating space connected to the first accommodating space and for accommodating the protrusion therein, an inner diameter of the second accommodating space is greater than an inner diameter of the first accommodating space, and the contact-target surface is a step surface demarcating a boundary between the first accommodating space and the second accommodating space.

In the brake device described above, the gap adjusting mechanism may include an elastic member for urging the protrusion such that the contact surface contacts the contact-target surface.

In the brake device described above, the second one of the male screw portion and the female screw portion may have an adjusting portion at an end portion thereof for rotating the second one of the male screw portion and the female screw portion relative to the first one of the male screw portion and the female screw portion.

In the brake device described above, the adjusting portion is one of adjusting portions provided in the second one of the male screw portion and the female screw portion at respective end portions thereof.

In the brake device described above, the adjusting portions may include a first adjusting portion and a second adjusting portion, the male screw portion may include a screw body to be fitted in the female screw portion and a rod fixedly attached to and aligned with the screw body and protruding beyond one of axial ends of the screw body. The first adjusting portion may be provided on an axial end of the screw body that is positioned opposite to the rod, and the second adjusting portion may be provided on an axial end of the rod that is positioned opposite to the screw body.

In the brake device described above, the first one of the male screw portion and the female screw portion may be the female screw portion and the second one of the male screw portion and the female screw portion may be the male screw portion.

To solve the above problems and in accordance with another aspect of the present invention, provided is a gap adjusting mechanism for use in a brake device. The brake device includes a pair of rotating arms, where the rotating arms each have a friction member attached on a tip end portion thereof, where the friction members are configured to sandwich a brake disc when at least one of the rotating arms rotates. The gap adjusting mechanism is connected to base end portions of the rotating arms that are positioned opposite to the tip end portions, each of the rotating arms (40) has a rotation center between the base and tip end portions thereof, and the gap adjusting mechanism is configured to adjust a distance between the base end portions of the rotating arms. The gap adjusting mechanism includes a male screw portion, a female screw portion for receiving the male screw portion fitted therein, and an input member for allowing a force fed from a piston provided within a cylinder to rotate a first one of the male screw portion and the female screw portion relative to a second one of the male screw portion and the female screw portion in one direction. When the first one of the male screw portion and the female screw portion rotates relative to the second one of the male screw portion and the female screw portion in the one direction, the distance between the base end portions of the rotating arms increases. The gap adjusting mechanism further includes a one-way clutch for allowing the first one of the male screw portion and the female screw portion to rotate relative to the second one of the male screw portion and the female screw portion in the one direction and preventing the first one of the male screw portion and the female screw portion from rotating relative to the second one of the male screw portion and the female screw portion in the other direction.

The above design can prevent a reduction in the distance between the base end portions of the rotating arms even if vibration or other factors may apply a force such that the first one of the male screw portion and the female screw portion is rotated relative to the second one of the male screw portion and the female screw portion in the other direction.

Other aspects and advantages of the present invention will be made apparent from the following description, taken in conjunction with the accompanying drawings, illustrating by way of example the principles of the present invention.

The invention, together with objects and advantages thereof, may best be understood by reference to the following description of the presently preferred embodiments together with the accompanying drawings in which:
Fig. 1 is a perspective view of a brake device,
Fig. 2 is a plan view showing the brake device with a partial sectional view,
Fig. 3 is a sectional view along the line 3-3 in Fig. 2,
Fig. 4 is a sectional view along the line 4-4 in Fig. 3,
Fig. 5 is a sectional view along the line 5-5 in Fig. 3, and
Fig. 6 is an enlarged view for a part shown in Fig. 2.

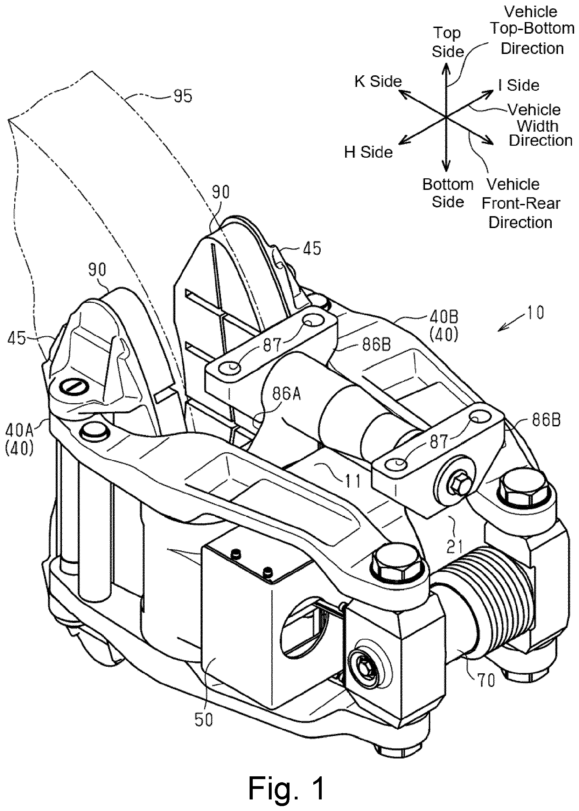

The following describes one embodiment of a brake device attached to a railroad vehicle and a gap adjusting mechanism for the brake device with reference to Figs. 1 to 6.

As shown in Fig. 1, a brake device 10 is a caliper brake device including a pair of brake pads 90. The brake device 10 is designed to brake rotation of a disc 95, which is rotatable integrally with the wheel of the railroad vehicle, by sandwiching the disk 95 between the brake pads 90. The brake device 10 and the disc 95 together constitute a disc brake device.

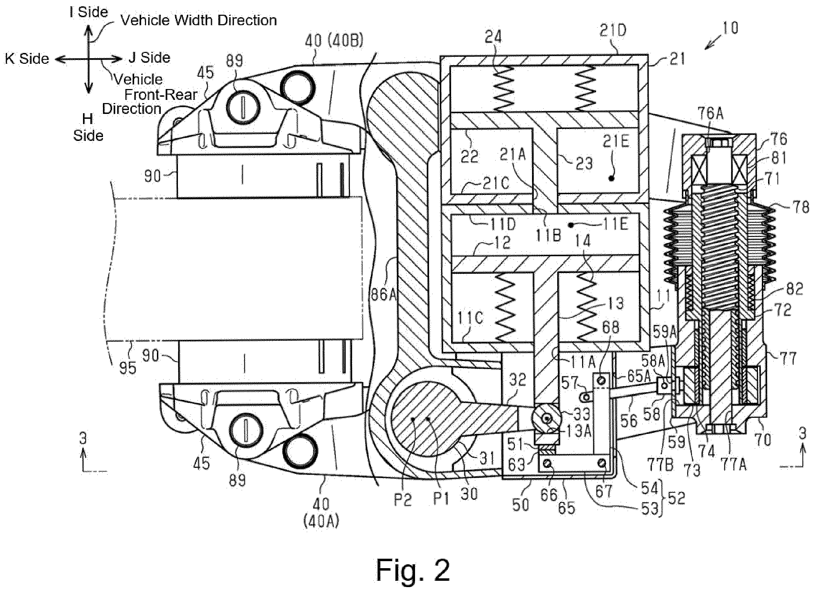

As shown in Fig 2, the brake device 10 includes a first cylinder 11 having a columnar shape. The central axis of the first cylinder 11 extends along the width direction of the vehicle. The first cylinder 11 has a circular cylindrical inner space defined therein. The first cylinder 11 has an end wall 11C on the H side in the vehicle width direction (the lower side in Fig. 2), which has a through hole 11A formed therein penetrating the end wall 11C in the thickness direction. The through hole 11A is positioned at the center of the end wall 11C of the first cylinder 11, which is on the H side in the vehicle width direction. The first cylinder 11 also has an end wall 11D on the I side in the vehicle width direction (the upper side in Fig. 2), which has a through hole 11B formed therein penetrating the end wall 11D in the thickness direction. The through hole 11B is positioned at the center of the end wall 11D of the first cylinder 11, which is on the I side in the vehicle width direction. The first cylinder 11 is fixedly attached to a caliper body 86A. As shown in Fig. 1, the caliper body 86A is supported on a bracket 86B for attaching the brake device 10 onto a bogie of the railroad vehicle. The bracket 86B has a plurality of bolt holes 87 formed therein. Bolts are inserted through the bolt holes 87 to secure the bracket 86B onto the bogie of the railroad vehicle.

As shown in Fig. 2, the first cylinder 11 has a first piston 12 disposed therein, and the first piston 12 is linearly movable along the axial direction of the first cylinder 11. The first piston 12 is substantially shaped like a disc. The outer diameter of the first piston 12 is substantially equal to the inner diameter of the first cylinder 11. The first piston 12 partitions the inner space of the first cylinder 11 into two parts next to each other in the axial direction of the first cylinder 11.

From the center of the first piston 12, a columnar output shaft 13 extends toward the H side in the vehicle width direction. The first piston 12 and the output shaft 13 are formed in one piece with each other. The output shaft 13 is linearly movable along the axial direction of the first cylinder 11 together with the first piston 12. The tip end portion of the output shaft 13 passes through the through hole 11A formed in the first cylinder 11 to reach the outside of the first cylinder 11. The output shaft 13 has an insertion hole 13A formed therein. The insertion hole 13A penetrates the tip end portion of the output shaft 13 in the direction orthogonal to the central axis of the output shaft 13.

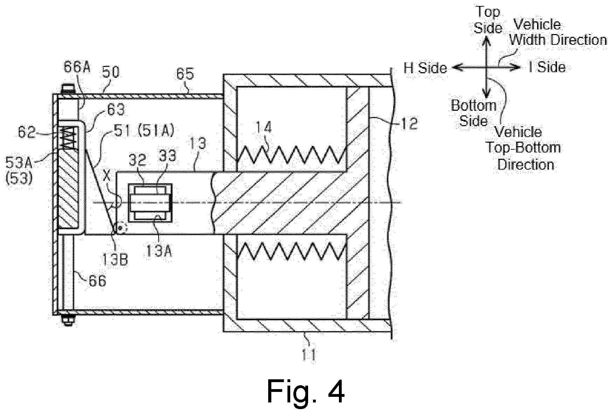

As shown in Fig. 4, a rotational body 13B substantially shaped like a circular column is rotatably supported on the output shaft 13 at a position between the insertion hole 13A and the tip end. The central axis of the rotational body 13B extends in the vehicle front-rear direction (the direction orthogonal to the plane of the paper in Fig. 4). A radially outer portion of the rotational body 13B protrudes beyond the tip-side end surface of the output shaft 13 toward the H side in the vehicle width direction. In the tip end portion of the output shaft 13, the rotational body 13B is positioned on the lower side in the vehicle top-bottom direction (the lower side in Fig. 4).

As shown in Fig. 2, the first cylinder 11 has a first spring 14 disposed therein. The first spring 14 is configured to urge the first piston 12 in a direction from the H side toward the I side in the vehicle width direction within the first cylinder 11. The first spring 14 is positioned between the first piston 12 and the end wall 11C of the first cylinder 11, which is positioned on the H side in the vehicle width direction. In the inner space within the first cylinder 11, a space 11E is defined on the I side in the vehicle width direction with respect to the first piston 12 and receives compressed air fed from an air source, which is not shown.

On the end wall 11D of the first cylinder 11, which is positioned on the I side in the vehicle width direction, a columnar second cylinder 21 is fixedly attached. The central axis of the second cylinder 21 is aligned with the central axis of the first cylinder 11. The second cylinder 21 has a circular cylindrical inner space defined therein. The second cylinder 21 has an end wall 21C on the H side in the vehicle width direction, which has a through hole 21A formed therein penetrating the end wall 21C in the thickness direction. The through hole 21A is positioned at the center of the end wall 21C of the second cylinder 21, which is on the H side in the vehicle width direction, and is in communication with the through hole 11B in the first cylinder 11.

The second cylinder 21 has a second piston 22 disposed therein, and the second piston 22 is linearly movable along the axial direction of the second cylinder 21. The second piston 22 is substantially shaped like a disc. The outer diameter of the second piston 22 is substantially equal to the inner diameter of the second cylinder 21. The second piston 22 partitions the inner space of the second cylinder 21 into two parts next to each other in the axial direction of the second cylinder 21.

From the center of the second piston 22, a columnar drive shaft 23 extends toward the H side in the vehicle width direction. The second piston 22 and the drive shaft 23 are formed in one piece with each other. The drive shaft 23 is inserted through the through hole 21A in the second cylinder 21 and the through hole 11B in the first cylinder 11. The drive shaft 23 is aligned with the output shaft 13 and positioned on the I side in the vehicle width direction with respect to the output shaft 13. The drive shaft 23 is linearly movable along the axial direction of the second cylinder 21 together with the second piston 22.

The second cylinder 21 has a second spring 24 disposed therein. The second spring 24 is configured to urge the second piston 22 in a direction from the I side to the H side in the vehicle width direction within the second cylinder 21. The second spring 24 is positioned between the end wall 21D of the second cylinder 21, which is positioned on the I side in the vehicle width direction, and the second piston 22. The urging force produced by the second spring 24 is greater than the urging force produced by the first spring 14. In the inner space within the second cylinder 21, a space 21E is defined on the H side in the vehicle width direction with respect to the second piston 22 and receives compressed air fed from an air source, which is not shown.

While the railroad vehicle is stationary, no compressed air is introduced into the space 21E within the inner space of the second cylinder 21, which is positioned on the H side with respect to the second piston 22 in the vehicle width direction. Accordingly, the urging force produced by the second spring 24 moves the second piston 22 and the drive shaft 23 toward the H side in the vehicle width direction, so that the drive shaft 23 pushes the first piston 12 toward the H side in the vehicle width direction. As a result, irrespective of whether the compressed air is introduced into the first cylinder 11, the first piston 12 and the output shaft 13 move toward the H side in the vehicle width direction.

As shown in Fig. 2, a rotating lever 30 is coupled to the output shaft 13. As the output shaft 13 linearly moves, the rotating lever 30 converts the linear movement made by the output shaft 13 into rotational movement. As a result, the rotating lever 30 rotates. The rotating lever 30 includes a circular portion 31, a lever body 32, and a roller 33. The circular portion 31 of the rotating lever 30 has a circular shape in plan view. The central axis of the circular shape extends along the vehicle top-bottom direction of Fig. 1 (orthogonally to the plane of the paper in Fig. 2). The circular portion 31 is rotatably supported on the H-side end portion of the caliper body 86A in the vehicle width direction. The central axis of the circular portion 31 constitutes a rotation center P1, on which the rotating lever 30 rotates. The lever body 32, which is substantially shaped like a rod, extends from the outer peripheral surface of the circular portion 31. On the tip end portion of the lever body 32, the roller 33, which is substantially shaped like a circular column, is rotatably supported. The rotational axis of the roller 33 is orthogonal to the axial direction of the first cylinder 11 and is parallel to the central axis of the circular portion 31. The tip end portion of the lever body 32 and the roller 33 are inserted in the insertion hole 13A formed in the output shaft 13.

As shown in Fig. 2, as the output shaft 13 linearly moves toward the H side in the vehicle width direction, the I-side portion of the inner peripheral surface of the insertion hole 13A in the vehicle width direction touches the roller 33. On the other hand, as the output shaft 13 linearly moves toward the I side in the vehicle width direction, the H-side portion of the inner peripheral surface of the insertion hole 13A in the vehicle width direction touches the roller 33.

The circular portion 31 of the rotating lever 30 is coupled with a rotating arm 40, which is rotatable as the output shaft 13 linearly moves to change the relative positions of the brake pad 90 and the disc 95. The rotating arm 40 and the rotating lever 30 are coupled together via a coupling portion centered around a rotation center P2, on which the rotating arm 40 rotates. The central axis of the rotation center P2 extends along the vehicle top-bottom direction. The rotation center P2, on which the rotating arm 40 rotates, is eccentric to the rotation center P1, on which the rotating lever 30 rotates. Specifically, the rotation center P2 is positioned opposite to the lever body 32 with respect to the rotation center P1. As described above, the circular portion 31 of the rotating lever 30 is rotatably supported on the H-side end portion of the caliper body 86A in the vehicle width direction. The rotating arm 40 is thus coupled via the rotating lever 30 with the H-side end portion of the caliper body 86A in the vehicle width direction.

The rotating arm 40 generally extends toward both sides in the vehicle front-rear direction (the left-right direction in Fig. 2) from the rotation center P2. The base end of the rotating arm 40 is positioned on the J side in the vehicle front-rear direction relative to the first cylinder 11. The tip end of the rotating arm 40 is positioned on the K side in the vehicle front-rear direction relative to the caliper body 86A.

The tip end portion of the rotating arm 40 is coupled with an attaching portion 45 via a coupling pin 89. The attaching portion 45 is positioned on the I side in the vehicle width direction relative to the rotating arm 40. The attaching portion 45 is swingable about the coupling pin 89. In plan view seen from the direction of the swing axis of the attaching portion 45, the attaching portion 45 has a substantially triangular shape such that the size is longer on the I side in the vehicle width direction. The brake pad 90 is fixedly attached to the I-side surface of the attaching portion 45 in the vehicle width direction. The brake pad 90 is substantially shaped like a flat plate following the end surface of the disc 95. The brake pad 90 is a friction member configured to be pressed against the disc 95 to produce a frictional force serving as a braking force.

Another rotating arm 40 is rotatably coupled with the I-side end of the caliper body 86A in the vehicle width direction. The rotating arm 40 positioned on the I side in the vehicle width direction also has an attaching portion 45 coupled therewith, and another brake pad 90 is fixedly attached to this attaching portion 45. The rotating arm 40, attaching portion 45, and brake pad 90 positioned on the I side in the vehicle width direction are arranged in line symmetry with but otherwise configured in the same manner as their counterparts positioned on the H side in the vehicle width direction. For this reason, the rotating arm 40, attaching portion 45, and brake pad 90 positioned on the I side in the vehicle width direction are denoted by the same reference numerals as their counterparts positioned on the H side in the vehicle width direction and will not be described herein in detail. When the two rotating arms 40 are distinguished from each other, however, different reference numerals are used as follows: the rotating arm 40 positioned on the H side in the vehicle width direction is referred to as the rotating arm 40A, whereas the rotating arm 40 positioned on the I side in the vehicle width direction is referred to as the rotating arm 40B.

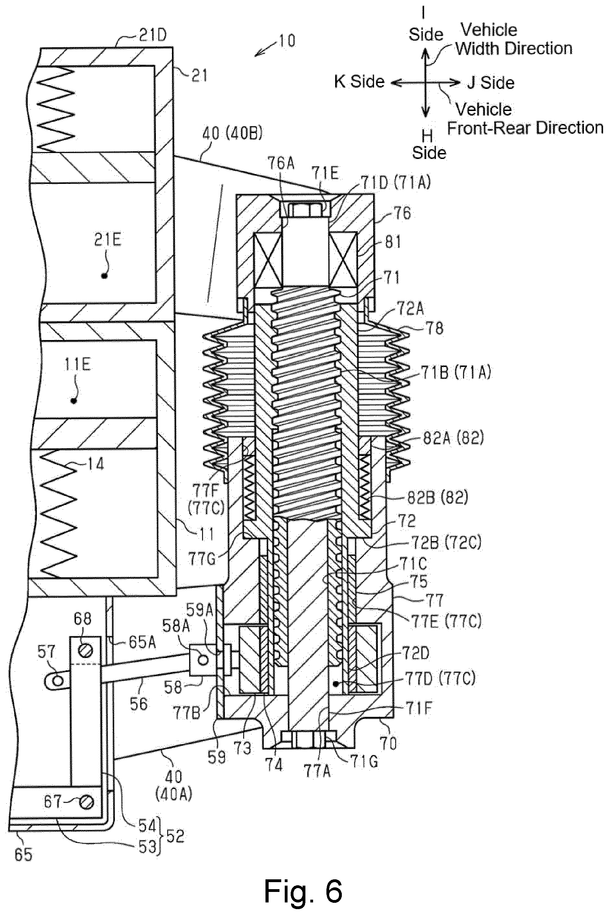

As shown in Fig. 2, the base end portions of the rotating arms 40 forming a pair are coupled together via a gap adjusting mechanism 70, which as a whole extends in the vehicle width direction. As shown in Fig. 6, the gap adjusting mechanism 70 has a first housing 76 coupled with the rotating arm 40B, which is the I-side one of the rotating arms 40 in the vehicle width direction. The first housing 76 has a bottom and a tubular shape and is open on the H side in the vehicle width direction. The first housing 76 has a circular cylindrical inner space defined therein. The first housing 76 has a through hole 76A formed therein. The through hole 76A penetrates the bottom wall of the first housing 76. The first housing 76 is coupled with the rotating arm 40B such that it is rotatable relative to the rotating arm 40B about an axis extending orthogonally to the central axis of the first housing 76.

As shown in Fig. 6, a male screw portion 71 is fitted onto the inner peripheral surface of the first housing 76 via a substantially tubular first rotation limiting mechanism 81. The male screw portion 71 has a rod-like shape as a whole. The male screw portion 71 includes a screw body 71A and a rod 71F. The screw body 71A is positioned on the I side in the vehicle width direction relative to the rod 71F. The screw body 71A includes a body portion 71B and a shaft portion 71D. The body portion 71B is positioned on the H side in the vehicle width direction relative to the shaft portion 71D. The entire outer peripheral surface of the body portion 71B is externally threaded. The body portion 71B has a fixing hole 71C formed therein, which is open through the H-side end surface of the body portion 71B in the vehicle width direction. The fixing hole 71C extends from the H-side end surface of the body portion 71B in the vehicle width direction toward the I side in the vehicle width direction. The fixing hole 71C is positioned at the center of the H-side end surface of the body portion 71B in the vehicle width direction. The fixing hole 71C has a polygonal cross-sectional shape when cut in the direction orthogonal to the vehicle width direction. The shaft portion 71D extends from the I-side end surface of the body portion 71B in the vehicle width direction toward the I side in the vehicle width direction. The shaft portion 71D is inserted into the first rotation limiting mechanism 81. The shaft portion 71D extends through the first rotation limiting mechanism 81 to be also inserted into the through hole 76A formed in the first housing 76. The I-side end portion of the shaft portion 71D in the vehicle width direction constitutes a first adjusting portion 71E substantially shaped like a hexagonal cylinder.

Within the fixing hole 71C formed in the screw body 71A, the rod 71F shaped like a column extending in the vehicle width direction is provided. The rod 71F has a polygonal cross-sectional shape when cut in the direction orthogonal to the vehicle width direction, which is substantially the same as the cross-sectional shape of the fixing hole 71C obtained when cutting the fixing hole 71C in the direction orthogonal to the vehicle width direction. The outer peripheral surface of the rod 71F is fixedly attached onto the inner peripheral surface of the fixing hole 71C formed in the screw body 71A. The central axis of the rod 71F is aligned with the central axis of the screw body 71A. An H-side portion of the rod 71F in the vehicle width direction protrudes beyond the fixing hole 71C formed in the screw body 71A. The H-side end portion of the rod 71F in the vehicle width direction constitutes a second adjusting portion 71G substantially shaped like a hexagonal cylinder. In other words, the second adjusting portion 71G is positioned on the H-side end portion of the rod 71F in the vehicle width direction, which is positioned opposite to the end portion of the rod 71F facing the screw body 71A. Here, the first adjusting portion 71E mentioned earlier is positioned on the I-side end portion of the screw body 71A in the vehicle width direction, which is positioned opposite to the end portion of the screw body 71A facing the rod 71F. Stated differently, the respective end portions of the male screw portion 71 are provided with an adjusting portion.

Although not shown in details, the first rotation limiting mechanism 81 limits the rotation of the male screw portion 71 relative to the first housing 76 if torque less than a predetermined value is applied to the male screw portion 71. If torque of the predetermined value or greater is applied to the male screw portion 71, on the other hand, the first rotation limiting mechanism 81 allows the rotation of the male screw portion 71 relative to the first housing 76.

The gap adjusting mechanism 70 has a second housing 77 coupled with the rotating arm 40A, which is the H-side one of the rotating arms 40 in the vehicle width direction. The second housing 77 has a bottom and a tubular shape and is open on the I side in the vehicle width direction. The second housing 77 has a through hole 77A formed therein. The through hole 77A penetrates the bottom wall of the second housing 77. The second housing 77 is coupled with the rotating arm 40A such that it is rotatable relative to the rotating arm 40A about an axis extending orthogonally to the central axis of the second housing 77.

The second housing 77 has a space 77C shaped like a circular cylinder as a whole defined therein. Specifically, the space 77C in the second housing 77 can be roughly divided into a bottom space 77D, an intermediate space 77E, and an end space 77F, which are arranged in the stated order in the vehicle width direction from the H side. The bottom space 77D is substantially shaped like a circular cylinder. The bottom space 77D is defined by the circumferential wall of the second housing 77, which has a window portion 77B radially penetrating it. The window portion 77B is positioned on the K side in the vehicle front-rear direction.

The bottom space 77D is connected at the I-side end thereof in the vehicle width direction to the intermediate space 77E. The size of the intermediate space 77E in the radial direction of the space 77C is less than the size of the bottom space 77D in the radial direction of the space 77C. In other words, the inner diameter of the intermediate space 77E is less than the inner diameter of the bottom space 77D. The intermediate space 77E is connected at the I-side end thereof in the vehicle width direction to the end space 77F. The size of the end space 77F in the radial direction of the space 77C is greater than the size of the intermediate space 77E in the radial direction of the space 77C. In other words, the inner diameter of the end space 77F is greater than the inner diameter of the intermediate space 77E. Accordingly, an annular step surface is formed to demarcate the boundary between the end space 77F and the intermediate space 77E and constitutes a contact target surface 77G. The intermediate space 77E is referred to as a first accommodating space. The end space 77F is referred to as a second accommodating space. The second housing 77 is referred to as a holder member.

On the inner peripheral surface of the intermediate space 77E within the second housing 77, a female screw portion 72 is attached via a one-way clutch 75 substantially shaped like a circular cylinder. The female screw portion 72 extends in the vehicle width direction and shaped like a circular cylinder as a whole. The female screw portion 72 includes a female screw body 72A, a protrusion 72B, and a connecting tube 72D. The connecting tube 72D is positioned on the H side in the vehicle width direction with respect to the female screw body 72A. The outer diameter of the connecting tube 72D is substantially equal to the inner diameter of the one-way clutch 75. The connecting tube 72D is inserted into the one-way clutch 75, and the outer peripheral surface of the connecting tube 72D is fitted with the one-way clutch 75. The connecting tube 72D protrudes toward the H side in the vehicle width direction beyond the one-way clutch 75, and the H-side end surface of the connecting tube 72D in the vehicle width direction contacts the bottom wall of the bottom space 77D within the second housing 77.

The female screw body 72A extends from the I-side end surface of the connecting tube 72D in the vehicle width direction toward the I side in the vehicle width direction. The female screw body 72A is substantially shaped like a circular cylinder. The female screw body 72A is internally threaded on the inner peripheral surface thereof in an I-side portion in the vehicle width direction. The female screw body 72A is provided in the end space 77F within the second housing 77. An I-side portion of the female screw body 72A in the vehicle width direction is on the I side in the vehicle width direction with respect to the second housing 77.

The protrusion 72B protrudes radially outward from the outer peripheral surface of the H-side end portion of the female screw body 72A on the H side in the vehicle width direction. The protrusion 72B extends on the female screw body 72A in the circumferential direction along the entire length and has an annular shape as a whole. The radial size of the protrusion 72B is greater than the radial size of the intermediate space 77E and substantially equal to the radial size of the end space 77F. The H-side end surface of the protrusion 72B of the female screw portion 72 in the vehicle width direction faces and abuts the contact target surface 77G of the second housing 77 in the vehicle width direction. This means that the H-side end surface of the protrusion 72B of the female screw portion 72 in the vehicle width direction constitutes a contact surface 72C.

A second rotation limiting mechanism 82 is provided between the outer peripheral surface of the female screw body 72A of the female screw portion 72 and the inner peripheral surface of the end space 77F within the second housing 77. The second rotation limiting mechanism 82 includes a stationary portion 82A and a spring 82B. The stationary portion 82A is positioned in the end space 77F at the I-side end thereof in the vehicle width direction. The stationary portion 82A has an annular shape as a whole. The outer peripheral surface of the stationary portion 82A is fixedly attached onto the inner peripheral surface of the end space 77F.

The spring 82B is positioned between the stationary portion 82A and the protrusion 72B of the female screw portion 72. The spring 82B extends from the stationary portion 82A and urges the protrusion 72B of the female screw portion 72 toward the H side in the vehicle width direction. In this way, the spring 82B urges the protrusion 72B of the female screw portion 72 such that the contact surface 72C of the protrusion 72B of the female screw portion 72 can contact the contact target surface 77G of the second housing 77. The spring 82B is an example elastic member.

The second rotation limiting mechanism 82 is configured such that the spring 82B urges the protrusion 72B of the female screw portion 72, thereby generating a force of a predetermined value or greater to tightly press the contact surface 72C of the female screw portion 72 against the contact target surface 77G of the second housing 77. This creates a frictional force between the contact surface 72C and the contact target surface 77G. This frictional force prevents the female screw portion 72 from rotating relative to the second housing 77 if low torque is applied to the female screw portion 72. Specifically, if torque less than a predetermined value is applied to the female screw portion 72, the second rotation limiting mechanism 82 prevents the rotation of the female screw portion 72 relative to the second housing 77. If torque of the predetermined value or greater is applied to the female screw portion 72, on the other hand, the second rotation limiting mechanism 82 allows the rotation of the female screw portion 72 relative to the second housing 77. Note that the predetermined value defined for the torque to determine whether to allow the relative rotation of the male and female screw portions 71 and 72 is smaller for the second rotation limiting mechanism 72 than for the first rotation limiting mechanism 81.

The male screw portion 71 described above is inserted into the female screw portion 72. The internal threads of the female screw body 72A of the female screw portion 72 are fitted with the external threads of the body portion 71B of the male screw portion 71. The male screw portion 71 extends through the female screw portion 72. The rod 71F of the male screw portion 71 is also inserted into the through hole 77A in the second housing 77. This means that the first and second housings 76 and 77 of the gap adjusting mechanism 70 are coupled together via the male and female screw portions 71 and 72.

On the outer peripheral surface of the second housing 77, a cylindrical cover 78 is fixedly attached. The cover 78 extends toward the first housing 76 and is fixedly attached onto the outer peripheral surface of the first housing 76. In other words, the cover 78 is attached to cover the gap between the second housing 77 and the first housing 76 from radially outside. The cover 78 is formed like a bellows in the axial direction so that it is expandable and retractable in the axial direction.

The first adjusting portion 71E of the male screw portion 71 is exposed through the through hole 76A in the first housing 76 toward the I side in the vehicle width direction. Similarly, the second adjusting portion 71G of the male screw portion 71 is exposed through the through hole 77A in the second housing 77 toward the H side in the vehicle width direction. The gap adjusting mechanism 70 is configured such that, if torque of a predetermined value or greater is applied to the male screw portion 71 via the first or second adjusting portion 71E or 71G of the male screw portion 71 using, for example, fingers or mechanical tools, the male screw portion 71 rotates relative to the first and second housings 76 and 77 and the female screw portion 72. As a result, the male screw portion 71 moves relative to the female screw portion 72 in the axial direction toward a side determined by the rotating direction. This in turn changes the length of the gap adjusting mechanism 70 in the axial direction, thereby changing the distance between the base end portions of the rotating arms 40. In the above-described manner, the gap adjusting mechanism 70 can be manually adjusted.

In the gap adjusting mechanism 70, an input member 73 is attached via a substantially cylindrical one-way clutch 74 on the outer peripheral surface of the connecting tube 72D of the female screw portion 72. The input member 73 is shaped like a circular cylinder, and its inner peripheral surface is attached onto the outer peripheral surface of the one-way clutch 74. The input member 73 and the one-way clutch 74 are positioned on the H side in the vehicle width direction with respect to the one-way clutch 75 and provided on the H-side end portion of the connecting tube 72D of the female screw portion 72 in the vehicle width direction. The outer surface of the input member 73 is partially exposed through the window portion 77B toward the K side in the vehicle front-rear direction.

Although not illustrated in detail, the one-way clutch 74 prevents the input member 73 from rotating in one direction relative to the female screw portion 72 and allows the input member 73 to rotate in the other direction relative to the female screw portion 72. Accordingly, if the input member 73 rotates in the one direction, the female screw portion 72 follows the input member 73 and thus rotates in the one direction.

Although not illustrated in detail, the one-way clutch 75 allows the female screw portion 72 to rotate in the one direction relative to the second housing 77 and prevents the female screw portion 72 from rotating in the other direction relative to the second housing 77. Accordingly, if the female screw portion 72 rotates in the one direction together with the input member 73, the female screw portion 72 rotates in the one direction relative to the second housing 77. The one-way clutch 75 corresponds to a one-way clutch for allowing a first one of screw portions to rotate relative to a second one of the screw portions in one direction and preventing the first one of the screw portions from rotating relative to the second one of the screw portions in the other direction. The female screw portion 72 corresponds to the first one of the screw portions, and the male screw portion 71 corresponds to the second one of the screw portions.

As shown in Fig. 2, a converting portion 50 for receiving and converting the linear movement made by the output shaft 13 into movement in the vehicle top-bottom direction is provided on the H side in the vehicle width direction with respect to the first cylinder 11. The converting portion 50 transmits the movement in the vehicle top-bottom direction to the gap adjusting mechanism 70. The converting portion 50 includes a case 65 enclosing the tip end portion of the output shaft 13. The case 65 is open toward the I side in the vehicle width direction and shaped like a quadrangular box as a whole. The tip end portion of the output shaft 13 reaches the internal space within the case 65. The J-side wall portion of the case 65 in the vehicle front-rear direction has an opening 65A formed therein, and the opening 65A penetrates the wall portion in the vehicle front-rear direction.

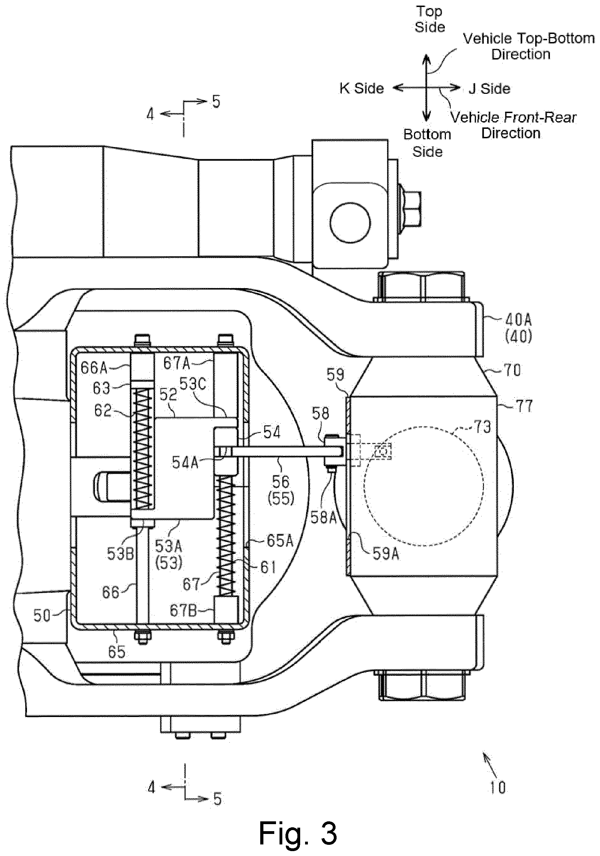

As shown in Fig. 3, the case 65 has a rod-shaped first shaft portion 66 fixedly attached therein, and the first shaft portion 66 extends in the vehicle top-bottom direction. When seen in the vehicle width direction, the first shaft portion 66 is positioned to overlap the output shaft 13. As shown in Fig. 2, the first shaft portion 66 is positioned in the vicinity of the H-side wall portion of the case 65 in the vehicle width direction. As shown in Fig. 3, the top-side end portion of the first shaft portion 66 has a first stopper 66A fixedly attached thereto, which is configured to serve as a registration member.

As shown in Fig. 3, the case 65 has a rod-shaped second shaft portion 67 fixedly attached therein, and the second shaft portion 67 extends in the vehicle top-bottom direction. As shown in Fig. 2, the second shaft portion 67 is positioned in the vicinity of the H-side wall portion of the case 65 in the vehicle width direction. The second shaft portion 67 is positioned on the J side in the vehicle front-rear direction with respect to the first shaft portion 66 and in the vicinity of the J-side wall portion of the case 65 in the vehicle front-rear direction. As shown in Fig. 3, the top-side end portion of the second shaft portion 67 has a second top-side stopper 67A fixedly attached thereto, which is configured to serve as a registration member. The bottom-side end portion of the second shaft portion 67 has a second bottom-side stopper 67B fixedly attached thereto, which is configured to serve as a registration member.

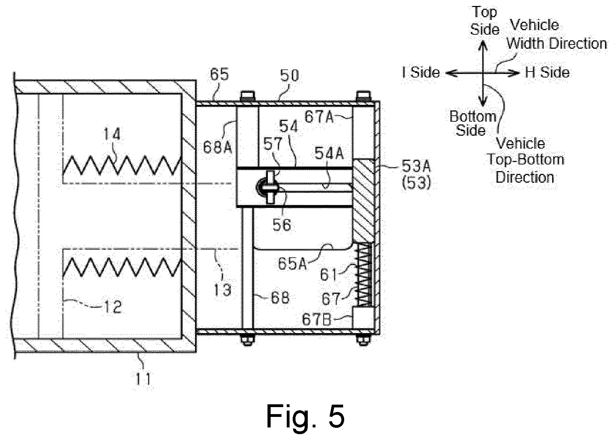

As shown in Fig. 5, the case 65 has a rod-shaped third shaft portion 68 fixedly attached therein, and the third shaft portion 68 extends in the vehicle top-bottom direction. As shown in Fig. 2, the third shaft portion 68 is positioned in the vicinity of the J-side wall portion of the case 65 in the vehicle front-rear direction. The third shaft portion 68 is positioned on the I side in the vehicle width direction with respect to the second shaft portion 67 and in the vicinity of the end wall 11C of the first cylinder 11, which is on the H side in the vehicle width direction. As shown in Fig. 5, the top-side end portion of the third shaft portion 68 has a third stopper 68A fixedly attached thereto, which is configured to serve as a registration member.

As shown in Fig. 3, the first, second and third shaft portions 66, 67 and 68 support a movable member 52, which is movable in the vehicle top-bottom direction relative to the gap adjusting mechanism 70. The movable member 52 includes a first movable member 53 and a second movable member 54. The first movable member 53 is supported on the first and second shaft portions 66 and 67. The first movable member 53 is movable in the vehicle top-bottom direction relative to the first and second shaft portions 66 and 67. A body portion 53A of the first movable member 53 is positioned between the first shaft portion 66 and the second shaft portion 67. The body portion 53A is shaped like a rectangular plate and extends in the vehicle top-bottom direction. An input portion 53B extends from the bottom-side end portion of the body portion 53A toward the K side in the vehicle front-rear direction. The input portion 53B has a through hole provided therein, which is not shown, and the first shaft portion 66 is inserted through the through hole. An output portion 53C extends from the top-side end portion of the body portion 53A toward the J side in the vehicle front-rear direction. The output portion 53C has a through hole provided therein, which is not shown, and the second shaft portion 67 is inserted through the through hole.

As shown in Fig. 3, the second movable member 54 is fixedly attached to the lower side of the output portion 53C of the first movable member 53. As shown in Fig. 5, the second movable member 54 extends toward the I side in the vehicle width direction and is substantially shaped like a rectangular plate. The H-side end portion of the second movable member 54 in the vehicle width direction has a through hole provided therein, which is not shown, and the second shaft portion 67 is inserted through the through hole. The I-side end portion of the second movable member 54 in the vehicle width direction has a through hole provided therein, which is not shown, and the third shaft portion 68 is inserted through the through hole. The second movable member 54 is thus supported on the second and third shaft portions 67 and 68 and movable in the vehicle top-bottom direction together with the first movable member 53.

As shown in Fig. 5, the second movable member 54 has a groove portion 54A extending therethrough in the vehicle front-rear direction. The groove portion 54A extends from the H-side end of the second movable member 54 in the vehicle width direction to the vicinity of the I-side end of the second movable member 54 in the vehicle width direction. Accordingly, the groove portion 54A is a slot having a larger size in the vehicle width direction than in the vehicle top-bottom direction.

As shown in Fig. 4, the first shaft portion 66 has a retaining portion 63 supported thereon, which is movable in the vehicle top-bottom direction. The retaining portion 63 is substantially U shaped and open toward the H side in the vehicle width direction, and the respective ends of the U-shaped retaining portion 63 are supported on the first shaft portion 66. As shown in Fig. 3, a first one of the ends of the U-shaped retaining portion 63 is supported on the first shaft portion 66 while being positioned above the input portion 53B of the first movable member 53 and below the first stopper 66A. A second one of the ends of the U-shaped retaining portion 63 is supported on the first shaft portion 66 while being positioned below the input portion 53B of the first movable member 53. Between the first end of the U-shaped retaining portion 63 and the input portion 53B of the first movable member 53, an absorption spring 62 is provided to urge the first movable member 53 in the vehicle top-bottom direction. The absorption spring 62 is supported on the first shaft portion 66 while being elastically compressed between the first end of the U-shaped retaining portion 63 and the input portion 53B of the first movable member 53 and urges the input portion 53B of the first movable member 53 downward in the vehicle top-bottom direction from the first end of the retaining portion 63. The maximum elastic deformation of the absorption spring 62 in the vehicle top-bottom direction is greater than the maximum movement of the movable member 52 in the vehicle top-bottom direction. Here, the maximum movement of the movable member 52 denotes the movable range in the vehicle top-bottom direction within which the movable member 52, which is supported on the first, second and third shaft portions 66, 67 and 68, can move.

As shown in Fig. 4, a transmitting portion 51 is fixedly attached to the I-side portion of the retaining portion 63 in the vehicle width direction, and the transmitting portion 51 receives and converts the force from the output shaft 13 and into a force acting in the vehicle top-bottom direction. The transmitting portion 51 is substantially shaped like a triangular prism such that it is upwardly tapered in the vehicle top-bottom direction. Specifically, when seen in the vehicle front-rear direction, the transmitting portion 51 is shaped like a right-angled triangle and an inclined surface 51A of the transmitting portion 51 faces the output shaft 13, and an acute angle X formed between the central axis line of the output shaft 13 and the inclined surface 51A of the transmitting portion 51 is approximately 70 degrees. In other words, the acute angle formed between the linear movement direction of the output shaft 13 and the inclined surface 51A of the transmitting portion 51 is greater than 45 degrees. The inclined surface 51A of the transmitting portion 51 is a flat surface.

As shown in Fig. 3, the second shaft portion 67 has a return spring 61 supported thereon, which is configured to urge the second movable member 54 in the vehicle top-bottom direction. The return spring 61 is elastically compressed between the bottom-side end of the second movable member 54 and the second bottom-side stopper 67B to extend from the second bottom-side stopper 67B to urge the second movable member 54 upward.

In the vehicle top-bottom direction, the bottom-side portion of the absorption spring 62 overlaps the top-side portion of the return spring 61. The absorption spring 62 and return spring 61 both touch the movable member 52 and are coupled together via the movable member 52. As noted, the absorption spring 62 and return spring 61 are coupled together via the movable member 52 while being arranged in parallel and partly overlap each other in the vehicle top-bottom direction.

Of the movable member 52, the second movable member 54 is coupled to a coupling portion 55 configured to transmit a force to the gap adjusting mechanism 70 as the movable member 52 moves. The coupling portion 55 includes a rod member 56 substantially shaped like a quadrangular prism, which is inserted into the groove portion 54A in the second movable member 54. The size of the rod member 56 in the vehicle top-bottom direction is substantially equal to the size of the groove portion 54A in the vehicle top-bottom direction. In other words, the rod member 56 is incapable of moving relative to the second movable member 54 in the vehicle top-bottom direction and thus moves in the vehicle top-bottom direction together with the second movable member 54 as the second movable member 54 moves in the vehicle top-bottom direction. The size of the rod member 56 in the vehicle width direction is less than the size of the groove portion 54A in the vehicle width direction. In other words, the rod member 56 is movable relative to the second movable member 54 in the vehicle width direction. Furthermore, the rod member 56 is inserted into the grove portion 54A extending in the vehicle front-rear direction, so that the rod member 56 is movable relative to the second movable member 54 in the vehicle front-rear direction.

As shown in Fig. 5, the K-side end of the rod member 56 in the vehicle front-rear direction has a limiting pin 57 fixedly attached thereto, which extends in the vehicle top-bottom direction. The size of the limiting pin 57 in the vehicle top-bottom direction is greater than the size of the groove portion 54A in the vehicle top-bottom direction, so that the limiting pin 57 prevents the rod member 56 from slipping out of the groove portion 54A.

As shown in Fig. 3, the J-side end of the rod member 56 in the vehicle front-rear direction has a supporting portion 58 fixedly attached thereto, which is coupled to the input member 73 of the gap adjusting mechanism 70. The supporting portion 58 is supported on the second housing 77 of the gap adjusting mechanism 70 via a guide plate 59 fixedly attached onto the second housing 77 of the gap adjusting mechanism 70. The guide plate 59 is shaped like a quadrangular plate as a whole and has an elongated hole 59A formed therein, which is a through hole and long in the vehicle top-bottom direction. The supporting portion 58 is inserted into the elongated hole 59A in the guide plate 59, so that the guide plate 59 supports the supporting portion 58 in a movable manner in the vehicle top-bottom direction. Accordingly, as the rod member 56 moves in the vehicle top-bottom direction, the supporting portion 58 moves in the vehicle top-bottom direction together with the rod member 56. As the supporting portion 58 moves in the vehicle top-bottom direction, a force acting in the vehicle top-bottom direction is transmitted to the input member 73 of the gap adjusting mechanism 70. The supporting portion 58 rotatably supports the rod member 56 via a supporting pin 58A extending in the vehicle top-bottom direction. Accordingly, the rod member 56 is rotatable about the coupling portion between the J-side end of the rod member 56 in the vehicle front-rear direction and the supporting pin 58A.

The following describes how the brake device 10 operates. While the railroad vehicle is in motion, the compressed air is introduced into the space 21E of the internal space within the second cylinder 21, which is positioned on the H side in the vehicle width direction relative to the second piston 22. With the compressed air introduced into the space 21E in this way, the second piston 22 and drive shaft 23 overcome the urging force applied by the second spring 24 and move toward the I side in the vehicle width direction, so that the driving force applied by the drive shaft 23 resulting from the urging force produced by the second spring 24 is not transmitted to the output shaft 13. Accordingly, assuming that the driving force from the drive shaft 23 is not transmitted to the output shaft 13, the following describes how the brake device 10 operates.

When the compressed air is introduced into the space 11E within the inner space of the first cylinder 11, which is positioned on the I side in the vehicle width direction relative to the first piston 12, the first piston 12 and output shaft 13 overcome the urging force produced by the first spring 14 and linearly move toward the H side in the vehicle width direction, as shown in Fig. 2. The I-side portion of the inner peripheral surface of the insertion hole 13A in the output shaft 13 in the vehicle width direction touches the roller 33 of the rotating lever 30. The roller 33 of the rotating lever 30 then moves toward the H side in the vehicle width direction while the roller 33 remains touching the I-side portion of the inner peripheral surface of the insertion hole 13A in the output shaft 13 in the vehicle width direction but the touching portion of the roller 33 gradually changes. As the roller 33 moves in this manner, the rotating lever 30 rotates about the rotation center P1 in one direction, or clockwise as viewed in Fig. 2. Here, the coupling portion between the rotating arm 40A, which is positioned on the H side in the vehicle width direction, and the rotating lever 30 also rotates about the rotation center P1 clockwise. Accordingly, the rotating arm 40A receives a force directed toward the I side in the vehicle width direction at the coupling portion between the rotating arm 40A and the rotating lever 30. As a result, the rotating arm 40A moves toward the I side in the vehicle width direction. This in turn moves the attaching portion 45 and brake pad 90 coupled with the rotating arm 40A toward the disc 95, so that the brake pad 90 on the rotating arm 40A comes into contact with the end surface of the disc 95.

In addition, as described above, as the rotating arm 40A moves toward the I side in the vehicle width direction, the gap adjusting mechanism 70 also moves toward the I side in the vehicle width direction. Also, the coupling portion between the base end portion of the rotating arm 40B and the gap adjusting mechanism 70 moves toward the I side in the vehicle width direction. Here, at substantially the middle portion of the rotating arm 40B in the extension direction thereof, the rotating arm 40B is rotatably coupled with the caliper body 86A. Therefore, the rotating arm 40B rotates counterclockwise about the coupling portion between the rotating arm 40B and the caliper body 86A. This in turn moves the attaching portion 45 and brake pad 90 coupled with the rotating arm 40B toward the disc 95, so that the brake pad 90 on the rotating arm 40B comes into contact with the end surface of the disc 95. As a result, the disc 95 is sandwiched in the vehicle width direction between the brake pad 90 on the rotating arm 40A and the brake pad 90 on the rotating arm 40B, so that the rotation is braked.

On the other hand, when no compressed air is introduced into the space 11E within the inner space of the first cylinder 11, which is positioned on the I side in the vehicle width direction relative to the first piston 12, and the pressure in this space drops, the urging force produced by the first spring 14 causes the first piston 12 and the output shaft 13 to linearly move toward the I side in the vehicle width direction. The H-side portion of the inner peripheral surface of the insertion hole 13A in the output shaft 13 in the vehicle width direction then touches the roller 33 of the rotating lever 30. The roller 33 of the rotating lever 30 then moves toward the I side in the vehicle width direction while the roller 33 remains touching the H-side portion of the inner peripheral surface of the insertion hole 13A in the output shaft 13 in the vehicle width direction but the touching portion of the roller 33 gradually changes. As the roller 33 moves in this manner, the rotating lever 30 rotates about the rotation center P1 in the other direction, or counterclockwise as viewed in Fig. 2. Here, the coupling portion between the rotating arm 40A and the rotating lever 30 also rotates counterclockwise about the rotation center P1. Accordingly, the rotating arm 40A receives a force directed toward the H side in the vehicle width direction at the coupling portion between the rotating arm 40A and the rotating lever 30. As a result, the rotating arm 40A moves toward the H side in the vehicle width direction. This in turn moves the attaching portion 45 and brake pad 90 coupled with the rotating arm 40A away from the disc 95, so that the brake pad 90 on the rotating arm 40A separates from the end surface of the disc 95.

In addition, as described above, as the rotating arm 40A moves toward the H side in the vehicle width direction, the gap adjusting mechanism 70 also moves toward the H side in the vehicle width direction. Also, the coupling portion between the base end portion of the rotating arm 40B and the gap adjusting mechanism 70 moves toward the H side in the vehicle width direction. Therefore, the rotating arm 40B rotates clockwise about the coupling portion between the rotating arm 40B and the caliper body 86A. This in turn moves the attaching portion 45 and the brake pad 90 coupled with the rotating arm 40B away from the disc 95, so that the brake pad 90 on the rotating arm 40B separates from the end surface of the disc 95.

Once the brake pad 90 comes into contact with the disc 95, the friction between the rotating disc 95 and the brake pad 90 gradually wears the brake pad 90 off. As the brake pad 90 wears out in this manner, the distance between the brake pad 90 and the disc 95 observed when the output shaft 13 is positioned the furthest on the I side in the vehicle width direction increases. This in turn increases the distance by which the output shaft 13 needs to linearly move in order to bring the brake pad 90, which is positioned away from the disc 95, into contact with the disc 95. If the output shaft 13 moves by a predetermined value or more, the rotational body 13B provided on the output shaft 13 touches the inclined surface 51A of the transmitting portion 51 as shown in Fig. 4. If the output shaft 13 attempts to move toward the H side in the vehicle width direction while the rotational body 13B on the output shaft 13 is in contact with the inclined surface 51A of the transmitting portion 51, the transmitting portion 51 moves downward in the vehicle top-bottom direction while the transmitting portion 51 remains touching the rotational body 13B on the output shaft 13 but the touching portion of the transmitting portion 51 gradually changes. Stated differently, the force acting in the direction of the linear movement made by the output shaft 13 is converted into a force acting in the vehicle top-bottom direction. If such a downward force in the vehicle top-bottom direction is transmitted to the first movable member 53 of the movable member 52 via the retaining portion 63 and absorption spring 62, the first and second movable members 53 and 54 move downward in the vehicle top-bottom direction. The rod member 56 of the coupling portion 55, which is inserted in the groove portion 54A in the second movable member 54, moves downward in the vehicle top-bottom direction together with the second movable member 54. Along with the rod member 56, the supporting portion 58 also moves downward in the vehicle top-bottom direction. As the supporting portion 58 moves downward in the vehicle top-bottom direction, the downward force in the vehicle top-bottom direction is transmitted to the input member 73 of the gap adjusting mechanism 70. This causes the input member 73 to rotate in one direction, in other words, counterclockwise in Fig. 3. As a result, a force is transmitted from the input member 73 via the one-way clutch 74 to the female screw portion 72, so that the female screw portion 72 rotates counterclockwise together with the input member 73. Since the female screw portion 72 rotates relative to the male screw portion 71 counterclockwise, this adjusts the distance between the base end portions of the rotating arms 40 such that the distance becomes long. As a result, the rotating arm 40A rotates in one direction in the circumferential direction about the rotation center P2 of the rotating arm 40A, in other words, clockwise in Fig. 2. The rotating arm 40B, on the other hand, rotates in the other direction in the circumferential direction about the coupling portion between the rotating arm 40B and the caliper body 86A, in other words, counterclockwise in Fig. 2. As the rotating arms 40 rotate in this way, the distance between the tip end portions of the rotating arms 40 can be adjusted such that the distance becomes short.

On the other hand, if the output shaft 13 attempts to move toward the I side in the vehicle width direction such that the rotational body 13B on the output shaft 13 moves away from the inclined surface 51A of the transmitting portion 51, the urging force produced by the return spring 61 moves the first and second movable members 53 and 54 of the movable member 52 upward in the vehicle top-bottom direction. The rod member 56 of the coupling portion 55, which is inserted in the groove portion 54A in the second movable member 54, moves upward in the vehicle top-bottom direction together with the second movable member 54. Along with the rod member 56, the supporting portion 58 also moves upward in the vehicle top-bottom direction. As the supporting portion 58 moves upward in the vehicle top-bottom direction, the upward force in the vehicle top-bottom direction is transmitted to the input member 73 of the gap adjusting mechanism 70. This causes the input member 73 to rotate in the other direction, in other words, clockwise in Fig. 3. When the input member 73 attempts to rotate clockwise, no force is transmitted from the input member 73 via the one-way clutch 74 to the female screw portion 72, as a result of which the female screw portion 72 is prevented from rotating clockwise.

If the urging force produced by the return spring 61 moves the first and second movable members 53 and 54 of the movable member 52 upward in the vehicle top-bottom direction, the upward force in the vehicle top-bottom direction is transmitted to the transmitting portion 51 via the retaining portion 63 and absorption spring 62, so that the transmitting portion 51 moves upward to go back to the original position.

Advantageous effects of the embodiment will be now described.
(1) In the brake device 10, the one-way clutch 75 is interposed between the outer peripheral surface of the connecting tube 72D of the female screw portion 72 and the inner peripheral surface of the intermediate space 77E in the second housing 77. The one-way clutch 75 held on the second housing 77 limits the rotation of the female screw portion 72 in the other direction relative to the second housing 77. For this reason, the female screw portion 72 does not rotate in the other direction relative to the male screw portion 71 even if vibration accompanying the driving of the brake device 10 and the traveling of the railroad vehicle may apply a force to the female screw portion 72 such that the female screw portion 72 may rotate in the other direction relative to the male screw portion 71. As a result, the embodiment can prevent an unexpected reduction in the distance between the base end portions of the rotating arms 40.
(2) A case is assumed that the one-way clutch 75 is interposed between the male screw portion 71 and the second housing 77. In this case, of the male screw portion 71 inserted through the female screw portion 72, a portion protruding beyond the female screw portion 72 needs to have the one-way clutch 75 attached thereto. According to this design, the male screw portion 71 is likely to have a large size in its axial direction to enable the one-way clutch 75 to be attached thereto.
   To address this issue, the brake device 10 includes the one-way clutch 75 being interposed between the second housing 77 and the female screw portion 72, which is positioned radially outside the male screw portion 71. This saves the male screw portion 71 from having a large dimension in the axial direction to enable the one-way clutch 75 to be attached thereto. The increase in the size of the male screw portion 71 in the axial direction means an increase in the size of the gap adjusting mechanism 70 in the axial direction, in other words, the size of the gap adjusting mechanism 70 in the vehicle width direction, but this is not the case for the embodiment. In this manner, the gap adjusting mechanism 70 can be expected to achieve a smaller size.
(3) In the brake device 10, the contact surface 72C of the protrusion 72B of the female screw portion 72 contacts the contact target surface 77G of the second housing 77, thereby producing a frictional force therebetween. This frictional force can diminish the force acting to rotate the female screw portion 72 in the other direction relative to the male screw portion 71 even if vibration or the like may apply a force such that the female screw portion 72 may rotate in the other direction relative to the male screw portion 71. This may reduce the force acting on the one-way clutch 75 in the other direction. As a result, the one-way clutch 75 can be expected to achieve a smaller size.
(4) In the brake device 10, the step surface demarcating the boundary between the end space 77F and the intermediate space 77E within the second housing 77 constitutes the contact target surface 77G. Accordingly, in the second housing 77, the contact target surface 77G, which is to touch the contact surface 72C of the protrusion 72B of the female screw portion 72, can be formed relatively simply by forming the two spaces having different inner diameters.
(5) The brake device 10 has the spring 82B extending from the stationary portion 82A and for urging the protrusion 72B of the female screw portion 72 toward the H side in the vehicle width direction. The urging force produced by the spring 82B generates a force of a predetermined value or greater to tightly press the contact surface 72C of the female screw portion 72 against the contact target surface 77G of the second housing 77. This can increase the frictional force produced between the contact surface 72C of the female screw portion 72 and the contact target surface 77G of the second housing 77.
(6) In the brake device 10, for example, the friction between the contact surface 72C of the protrusion 72B of the female screw portion 72 and the contact target surface 77G of the second housing 77 may wear the contact surface 72C and the contact target surface 77G out. This may create a gap between the contact surface 72C of the female screw portion 72 and the contact target surface 77G of the second housing 77, as a result of which the contact surface 72C and the contact target surface 77G may not come into contact with each other. Likewise, manufacturing-inducted errors of the female screw portion 72 and the second housing 77 may create a gap between the contact surface 72C of the female screw portion 72 and the contact target surface 77G of the second housing 77, as a result of which the contact surface 72C and the contact target surface 77G may not come into contact with each other.

To address this issue, the brake device 10 has the spring 82B extending from the stationary portion 82A and for urging the protrusion 72B of the female screw portion 72 toward the H side in the vehicle width direction. For this reason, the contact surface 72C of the female screw portion 72 and the contact target surface 77G of the second housing 77 can more reliably come into contact with each other even if the above-mentioned wearing and manufacturing-inducted errors of the female screw portion 72 and the second housing 77 may create a gap between the contact surface 72C of the female screw portion 72 and the contact target surface 77G of the second housing 77.

(7) In the brake device 10, the first and second adjusting portions 71E and 71G of the male screw portion 71 are exposed in the vehicle width direction. The gap adjusting mechanism 70 is configured such that, if torque of a predetermined value or greater is applied to the first and second adjusting portions 71E and 71G of the male screw portion 71 using, for example, fingers or mechanical tools, the male screw portion 71 rotates relative to the first and second housings 76 and 77 and the female screw portion 72. As a result, the male screw portion 71 moves relative to the female screw portion 72 in the axial direction toward a side determined by the rotating direction. This in turn changes the length of the gap adjusting mechanism 70 in the axial direction, thereby changing the distance between the base end portions of the rotating arms 40. This also causes a change in the distance between the tip end portions of the rotating arms 40, thereby changing the position of the brake pads 90. Accordingly, for example, when the brake pads 90 are worn out and replaced with new brake pads 90 in the brake device 10, the male screw portion 71 can be repositioned in accordance with the new brake pads 90.

(8) In the brake device 10, the first adjusting portion 71E of the male screw portion 71 is positioned on the I side in the vehicle width direction and the second adjusting portion 71G of the male screw portion 71 is repositioned on the H side in the vehicle width direction. With such a design, when attempts are made to reposition the male screw portion 71 relative to the female screw portion 72, the repositioning can be performed from either side in the vehicle width direction. This can contribute to facilitate the work do be done by an operator.

(9) The male screw portion 71 of the brake device 10 includes the screw body 71A and the rod 71F. The screw body 71A has the first adjusting portion 71E, and the rod 71F has the second adjusting portion 71G. When the male screw portion 71 is manufactured, for example, the first adjusting portion 71E is formed in the screw body 71A, and the second adjusting portion 71G is formed in the rod 71F. The rod 71F is then inserted into the fixing hole 71C of the screw body 71A. In this manner, the manufacturing of the male screw portion 71 can be completed. This, for example, eliminates the need of forming the two adjusting portions, in other words, the first and second adjusting portions 71E and 71G in a single part. Accordingly, the two adjusting portions, in other words, the first and second adjusting portions 71E and 71G can be easily formed in the male screw portion 71.

The above embodiment can be modified as described below. The above embodiment and
the following modifications can be implemented in combination as long as they are technically consistent with each other.

In the above-described embodiment, the gap adjusting mechanism 70 can be coupled to the pair of rotating arms 40 at different positions. For example, the first housing 76 of the gap adjusting mechanism 70 can be alternatively coupled to a portion of the rotating arm 40B that is positioned between (i) the base end portion and (ii) the coupling portion between the rotating arm 40B and the caliper body 86A. Likewise, the second housing 77 of the gap adjusting mechanism 70 can be coupled to the rotating arm 40A at different positions.

The above embodiment may be practiced without the spring 82B. With such a design, a frictional force can be also produced between the contact surface 72C of the protrusion 72B of the female screw portion 72 and the contact target surface 77G of the second housing 77 as long as they touch each other.

The above embodiment can be modified such that the contact target surface of the second housing 77 can be differently positioned. For example, the I-side end surface of the second housing 77 in the vehicle width direction may constitute the contact target surface.

In the above embodiment, the protrusion of the female screw portion 72 can be modified. For example, the protrusion 72B may extend in the circumferential direction partially over the female screw body 72A.

In the above embodiment, the male screw portion 71 includes two parts, or the screw body 71A and the rod 71F. The embodiment is not limited to such and the male screw portion 71 may be formed as a one-piece member.

In the above embodiment, the number of the adjusting portions of the male screw portion 71 can be changed. More specifically, the male screw portion 71 does not need to include the first and second adjusting portions 71E and 71G, but one of the first and second adjusting portions 71E and 71G may be omitted. Alternatively, neither of the first and second adjusting portions 71E and 71G of the male screw portion 71 may be formed. When this design is employed, the gap adjusting mechanism 70 is partly taken into pieces in order to reposition the male and female screw portions 71 and 72, for example.

The above embodiment can be modified such that the one-way clutch 75 may be positioned differently. For example, when the force produced by the output shaft 13 is transmitted to the male screw portion 71, the one-way clutch 75 may be interposed between the second housing 77 and the male screw portion 71. This alternative design is specifically described. Of the male screw portion 71 inserted through the female screw portion 72, a portion protrudes beyond the female screw portion 72. If the one-way clutch 75 is attached to this portion of the male screw portion 71, the one-way clutch 75 can be interposed between the male screw portion 71 and the second housing 77. The one-way clutch 75 can be positioned at any different positions as long as, for example, it can prevent the rotation of the female screw portion 72 in the other direction relative to the male screw portion 71.

## Claims

1. A brake device (10) comprising:
a pair of rotating arms (40), the rotating arms (40) each having a friction member (90) attached on a tip end portion thereof, the friction members (90) being configured to sandwich a brake disc (95) when at least one of the rotating arms (40) rotates; and
a gap adjusting mechanism (70) connected to base end portions of the rotating arms (40) that are positioned opposite to the tip end portions, each of the rotating arms (40) having a rotation center between the base and tip end portions thereof, the gap adjusting mechanism (70) being configured to adjust a distance between the base end portions of the rotating arms (40), wherein
the gap adjusting mechanism (70) includes:
a male screw portion (71);
a female screw portion (72) for receiving the male screw portion (71) fitted therein; and
an input member (73) for allowing a force fed from a piston (12) provided within a cylinder (11) to rotate a first one of the male screw portion (71) and the female screw portion (72) relative to a second one of the male screw portion (71) and the female screw portion (72) in one direction,
when the first one of the male screw portion (71) and the female screw portion (72) rotates relative to the second one of the male screw portion (71) and the female screw portion (72) in said one direction, the distance between the base end portions of the rotating arms (40) increases, and
the gap adjusting mechanism (70) further includes a one-way clutch (75) for allowing the first one of the male screw portion (71) and the female screw portion (72) to rotate relative to the second one of the male screw portion (71) and the female screw portion (72) in said one direction and preventing the first one of the male screw portion (71) and the female screw portion (72) from rotating relative to the second one of the male screw portion (71) and the female screw portion (72) in the other direction, the brake device (10) further comprising
a holder member (77) holding the first one of the male screw portion (71) and the female screw portion (72) and being fixedly attached to one of the rotating arms (40A), wherein
the one-way clutch (75) is interposed between the first one of the male screw portion (71) and the female screw portion (72) and the holder member (77), wherein
the first one of the male screw portion (71) and the female screw portion (72) has a protrusion (72B) protruding radially outside, and
the protrusion (72B) has a contact surface (72C) facing a contact-target surface (77G) of the holder member (77) and being configured to contact the contact-target surface (77G) of the holder member (77) in an axial direction of the male and female screw portions (71, 72) **characterized in that**
the holder member (77) has a first accommodating space (77E) for accommodating the one-way clutch (75) therein and a second accommodating space (77F) connected to the first accommodating space (77E) and for accommodating the protrusion (72B) therein,
an inner diameter of the second accommodating space (77F) is greater than an inner diameter of the first accommodating space (77E), and
the contact-target surface (77G) is a step surface demarcating a boundary between the first accommodating space (77E) and the second accommodating space (77F).

2. The brake device (10) according to claim 1, wherein
the gap adjusting mechanism (70) includes an elastic member (82B) for urging the protrusion (72B) such that the contact surface (72C) contacts the contact-target surface (77G).

3. The brake device (10) according to claim 1 or 2, wherein
the second one of the male screw portion (71) and the female screw portion (72) has an adjusting portion (71E, 71G) at an end portion thereof for rotating the second one of the male screw portion (71) and the female screw portion (72) relative to the first one of the male screw portion (71) and the female screw portion (72).

4. The brake device (10) according to claim 3, wherein
the adjusting portion is one of adjusting portions (71E, 71G) provided in the second one of the male screw portion (71) and the female screw portion (72) at respective end portions thereof.

5. The brake device (10) according to claim 4, wherein
the adjusting portions (71E, 71G) include a first adjusting portion (71E) and a second adjusting portion (71G),
the male screw portion (71) includes a screw body (71A) to be fitted in the female screw portion (72) and a rod (71F) fixedly attached to and aligned with the screw body (71A) and protruding beyond one of axial ends of the screw body (71A), and
the first adjusting portion (71E) is provided on an axial end of the screw body (71A) that is positioned opposite to the rod (71F), and the second adjusting portion (71G) is provided on an axial end of the rod (71F) that is positioned opposite to the screw body (71A).

6. The brake device (10) according to any one of claims 1 to 5, wherein
the first one of the male screw portion (71) and the female screw portion (72) is the female screw portion (72) and the second one of the male screw portion (71) and the female screw portion (72) is the male screw portion (71).

7. A gap adjusting mechanism (70) for use in a brake device (10), the brake device (10) including a pair of rotating arms (40), the rotating arms (40) each having a friction member (90) attached on a tip end portion thereof, the friction members (90) being configured to sandwich a brake disc (95) when at least one of the rotating arms (40) rotates,
the gap adjusting mechanism (70) being connected to base end portions of the rotating arms (40) that are positioned opposite to the tip end portions, each of the rotating arms (40) has a rotation center between the base and tip end portions thereof, the gap adjusting mechanism (70) being configured to adjust a distance between the base end portions of the rotating arms (40), the gap adjusting mechanism (70) comprising:
a male screw portion (71);
a female screw portion (72) for receiving the male screw portion (71) fitted therein; and
an input member (73) for allowing a force fed from a piston (12) provided within a cylinder (11) to rotate a first one of the male screw portion (71) and the female screw portion (72) relative to a second one of the male screw portion (71) and the female screw portion (72) in one direction, wherein
when the first one of the male screw portion (71) and the female screw portion (72) rotates relative to the second one of the male screw portion (71) and the female screw portion (72) in said one direction, the distance between the base end portions of the rotating arms (40) increases, and
the gap adjusting mechanism (70) further includes a one-way clutch (75) for allowing the first one of the male screw portion (71) and the female screw portion (72) to rotate relative to the second one of the male screw portion (71) and the female screw portion (72) in said one direction and preventing the first one of the male screw portion (71) and the female screw portion (72) from rotating relative to the second one of the male screw portion (71) and the female screw portion (72) in the other direction,
the gap adjusting mechanism (70) further comprising
a holder member (77) holding the first one of the male screw portion (71) and the female screw portion (72) and being fixedly attached to one of the rotating arms (40A), wherein
the one-way clutch (75) is interposed between the first one of the male screw portion (71) and the female screw portion (72) and the holder member (77), wherein
the first one of the male screw portion (71) and the female screw portion (72) has a protrusion (72B) protruding radially outside, and
the protrusion (72B) has a contact surface (72C) facing a contact-target surface (77G) of the holder member (77) and being configured to contact the contact-target surface (77G) of the holder member (77) in an axial direction of the male and female screw portions (71, 72) **characterized in that**
the holder member (77) has a first accommodating space (77E) for accommodating the one-way clutch (75) therein and a second accommodating space (77F) connected to the first accommodating space (77E) and for accommodating the protrusion (72B) therein,
an inner diameter of the second accommodating space (77F) is greater than an inner diameter of the first accommodating space (77E), and
the contact-target surface (77G) is a step surface demarcating a boundary between the first accommodating space (77E) and the second accommodating space (77F).

## Patentansprüche

1. Eine Bremsvorrichtung (10), umfassend:
ein Paar rotierender Arme (40), wobei jeder rotierende Arm (40) ein Reibungselement (90) aufweist, das an einem Spitzenendabschnitt davon angebracht ist, wobei die Reibungselemente (90) konfiguriert sind, eine Bremsscheibe (95) dazwischen anzuordnen, wenn sich zumindest einer der rotierenden Arme (40) dreht; und
einen Spalteinstellmechanismus (70), der mit Basisendabschnitten der rotierenden Arme (40) verbunden ist, die gegenüber den Spitzenendabschnitten positioniert sind, wobei jeder der rotierenden Arme (40) ein Rotationszentrum zwischen den Basis- und Spitzenendabschnitten davon aufweist, wobei der Spalteinstellmechanismus (70) konfiguriert ist, um einen Abstand zwischen den Basisendabschnitten der rotierenden Arme (40) einzustellen, wobei der Spalteinstellmechanismus (70) enthält:
einen männlichen Schraubenabschnitt (71);
einen weiblichen Schraubenabschnitt (72) zur Aufnahme des darin eingepassten männlichen Schraubenabschnitts (71); und
ein Eingangselement (73), das es einer von einem in einem Zylinder (11) vorgesehenen Kolben (12) eingespeisten Kraft ermöglicht, einen ersten von dem männlichen Schraubenabschnitt (71) und dem weiblichen Schraubenabschnitt (72) relativ zu einem zweiten von dem männlichen Schraubenabschnitt (71) und dem weiblichen Schraubenabschnitt (72) in einer Richtung zu drehen,
wenn der erste des männlichen Schraubenabschnitts (71) und des weiblichen Schraubenabschnitts (72) sich relativ zu dem zweiten des männlichen Schraubenabschnitts (71) und des weiblichen Schraubenabschnitts (72) in der einen Richtung dreht, der Abstand zwischen den Basisendabschnitten der rotierenden Arme (40) zunimmt, und
der Spalteinstellmechanismus (70) ferner eine Einwegkupplung (75) enthält, die es dem ersten des männlichen Schraubenabschnitts (71) und des weiblichen Schraubenabschnitts (72) ermöglicht, sich relativ zu dem zweiten des männlichen Schraubenabschnitts (71) und des weiblichen Schraubenabschnitts (72) in der einen Richtung zu drehen, und verhindert, dass sich der erste des männlichen Schraubenabschnitts (71) und des weiblichen Schraubenabschnitts (72) relativ zu dem zweiten des männlichen Schraubenabschnitts (71) und des weiblichen Schraubenabschnitts (72) in der anderen Richtung dreht, wobei die Bremsvorrichtung (10) ferner umfasst
ein Halteelement (77), das den ersten des männlichen Schraubenabschnitts (71) und des weiblichen Schraubenabschnitts (72) hält und fest an einem der rotierenden Arme (40A) angebracht ist, wobei
die Einwegkupplung (75) zwischen dem ersten von dem männlichen Schraubenabschnitt (71) und dem weiblichen Schraubenabschnitt (72) und dem Halteelement (77) angeordnet ist, wobei
der erste von dem männlichen Schraubenabschnitt (71) und dem weiblichen Schraubenabschnitt (72) einen Vorsprung (72B) aufweist, der radial nach außen vorsteht, und
der Vorsprung (72B) eine Kontaktfläche (72C) aufweist, die einer Kontaktzielfläche (77G) des Halteelements (77) zugewandt ist und so konfiguriert ist, dass sie die Kontaktzielfläche (77G) des Halteelements (77) in einer axialen Richtung der männlichen und weiblichen Schraubenabschnitte (71, 72) kontaktiert, **dadurch gekennzeichnet, dass**
das Halteelement (77) einen ersten Aufnahmeraum (77E) zum Aufnehmen der Einwegkupplung (75) darin und einen zweiten Aufnahmeraum (77F) aufweist, der mit dem ersten Aufnahmeraum (77E) verbunden ist und zum Aufnehmen des Vorsprungs (72B) darin dient,
ein Innendurchmesser des zweiten Aufnahmeraums (77F) größer ist als ein Innendurchmesser des ersten Aufnahmeraums (77E), und
die Kontaktzielfläche (77G) eine Stufenfläche ist, die eine Grenze zwischen dem ersten Aufnahmeraum (77E) und dem zweiten Aufnahmeraum (77F) abgrenzt.

2. Die Bremsvorrichtung (10) nach Anspruch 1, wobei
der Spalteinstellmechanismus (70) ein elastisches Element (82B) enthält, um den Vorsprung (72B) so zu drängen, dass die Kontaktfläche (72C) die Kontaktzielfläche (77G) kontaktiert.

3. Die Bremsvorrichtung (10) nach Anspruch 1 oder 2, wobei
der zweite von dem männlichen Schraubenabschnitt (71) und dem weiblichen Schraubenabschnitt (72) einen Einstellabschnitt (71E, 71G) an einem Endabschnitt davon aufweist, um den zweiten von dem männlichen Schraubenabschnitt (71) und dem weiblichen Schraubenabschnitt (72) relativ zu dem ersten von dem männlichen Schraubenabschnitt (71) und dem weiblichen Schraubenabschnitt (72) zu drehen.

4. Die Bremsvorrichtung (10) nach Anspruch 3, wobei
der Einstellabschnitt einer von Einstellabschnitten (71E, 71G) ist, die in dem zweiten des Außengewindeabschnitts (71) und des Innengewindeabschnitts (72) an deren jeweiligen Endabschnitten vorgesehen sind.

5. Die Bremsvorrichtung (10) nach Anspruch 4, wobei
die Einstellabschnitte (71E, 71G) einen ersten Einstellabschnitt (71E) und einen zweiten Einstellabschnitt (71G) enthalten,
der männliche Schraubenabschnitt (71) einen Schraubenkörper (71A), der in den weiblichen Schraubenabschnitt (72) einzupassen ist, und eine Stange (71F) enthält, die fest an dem Schraubenkörper (71A) angebracht und mit diesem ausgerichtet ist und über eines der axialen Enden des Schraubenkörpers (71A) hinausragt, und
der erste Einstellabschnitt (71E) an einem axialen Ende des Schraubenkörpers (71A) vorgesehen ist,das gegenüber der Stange (71F) positioniert ist, und der zweite Einstellabschnitt (71G) an einem axialen Ende der Stange (71F) vorgesehen ist, das gegenüber dem Schraubenkörper (71A) positioniert ist.

6. Die Bremsvorrichtung (10) nach irgendeinem der Ansprüche 1 bis 5, wobei
der erste des männlichen Schraubenabschnitts (71) und des weiblichen Schraubenabschnitts (72) der weibliche Schraubenabschnitt (72) ist und der zweite des männlichen Schraubenabschnitts (71) und des weiblichen Schraubenabschnitts (72) der männliche Schraubenabschnitt (71) ist.

7. Ein Spalteinstellmechanismus (70) zur Verwendung in einer Bremsvorrichtung (10), wobei die Bremsvorrichtung (10) ein Paar rotierender Arme (40) enthält, wobei jeder rotierende Arm (40) ein Reibungselement (90) aufweist, das an einem Spitzenendabschnitt davon angebracht ist, wobei die Reibungselemente (90) konfiguriert sind, eine Bremsscheibe (95) dazwischen anzuordnen, wenn sich zumindest einer der rotierenden Arme (40) dreht,
der Spalteinstellmechanismus (70) mit Basisendabschnitten der rotierenden Arme (40) verbunden ist, die gegenüber den Spitzenendabschnitten positioniert sind, wobei jeder der rotierenden Arme (40) ein Rotationszentrum zwischen den Basis- und Spitzenendabschnitten davon aufweist, wobei der Spalteinstellmechanismus (70) konfiguriert ist, um einen Abstand zwischen den Basisendabschnitten der rotierenden Arme (40) einzustellen, wobei der Spalteinstellmechanismus (70) umfasst:
einen männlichen Schraubenabschnitt (71);
einen weiblichen Schraubenabschnitt (72) zur Aufnahme des darin eingepassten männlichen Schraubenabschnitts (71); und
ein Eingangselement (73), das es einer von einem in einem Zylinder (11) vorgesehenen Kolben (12) eingespeisten Kraft ermöglicht, einen ersten von dem männlichen Schraubenabschnitt (71) und dem weiblichen Schraubenabschnitt (72) relativ zu einem zweiten von dem männlichen Schraubenabschnitt (71) und dem weiblichen Schraubenabschnitt (72) in einer Richtung zu drehen, wobei
wenn der erste des männlichen Schraubenabschnitts (71) und des weiblichen Schraubenabschnitts (72) sich relativ zu dem zweiten des männlichen Schraubenabschnitts (71) und des weiblichen Schraubenabschnitts (72) in der einen Richtung dreht, der Abstand zwischen den Basisendabschnitten der rotierenden Arme (40) zunimmt, und
der Spalteinstellmechanismus (70) ferner eine Einwegkupplung (75) enthält, die es dem ersten des männlichen Schraubenabschnitts (71) und des weiblichen Schraubenabschnitts (72) ermöglicht, sich relativ zu dem zweiten des männlichen Schraubenabschnitts (71) und des weiblichen Schraubenabschnitts (72) in der einen Richtung zu drehen, und verhindert, dass sich der erste des männlichen Schraubenabschnitts (71) und des weiblichen Schraubenabschnitts (72) relativ zu dem zweiten des männlichen Schraubenabschnitts (71) und des weiblichen Schraubenabschnitts (72) in der anderen Richtung dreht,
wobei der Spalteinstellmechanismus (70) ferner umfasst
ein Halteelement (77), das den ersten des männlichen Schraubenabschnitts (71) und des weiblichen Schraubenabschnitts (72) hält und fest an einem der rotierenden Arme (40A) angebracht ist, wobei
die Einwegkupplung (75) zwischen dem ersten von dem männlichen Schraubenabschnitt (71) und dem weiblichen Schraubenabschnitt (72) und dem Halteelement (77) angeordnet ist, wobei
der erste von dem männlichen Schraubenabschnitt (71) und dem weiblichen Schraubenabschnitt (72) einen Vorsprung (72B) aufweist, der radial nach außen vorsteht, und
der Vorsprung (72B) eine Kontaktfläche (72C) aufweist, die einer Kontaktzielfläche (77G) des Halteelements (77) zugewandt ist und so konfiguriert ist, dass sie die Kontaktzielfläche (77G) des Halteelements (77) in einer axialen Richtung der männlichen und weiblichen Schraubenabschnitte (71, 72) kontaktiert, **dadurch gekennzeichnet, dass**
das Halteelement (77) einen ersten Aufnahmeraum (77E) zum Aufnehmen der Einwegkupplung (75) darin und einen zweiten Aufnahmeraum (77F) aufweist, der mit dem ersten Aufnahmeraum (77E) verbunden ist und zum Aufnehmen des Vorsprungs (72B) darin dient,
ein Innendurchmesser des zweiten Aufnahmeraums (77F) größer ist als ein Innendurchmesser des ersten Aufnahmeraums (77E), und
die Kontaktzielfläche (77G) eine Stufenfläche ist, die eine Grenze zwischen dem ersten Aufnahmeraum (77E) und dem zweiten Aufnahmeraum (77F) abgrenzt.

## Revendications

1. Dispositif de frein (10) comprenant :
une paire de bras rotatifs (40), les bras rotatifs (40) comportant chacun un élément de friction (90) attaché à une de leurs portions d'extrémité de pointe, les éléments de friction (90) étant configurés pour y intercaler un disque de frein (95) quand au moins l'un des bras rotatifs (40) tourne ; et
un mécanisme d'ajustement d'écartement (70) connecté à des portions d'extrémité de base des bras rotatifs (40) qui sont positionnées à l'opposé des portions d'extrémité de pointe, chacun des bras rotatifs (40) comportant un centre de rotation entre ses portions d'extrémité de base et de pointe, le mécanisme d'ajustement d'écartement (70) étant configuré pour ajuster la distance entre les portions d'extrémité de base des bras rotatifs (40), dans lequel
le mécanisme d'ajustement d'écartement (70) comprend :
une portion de vis mâle (71) ;
une portion de vis femelle (72) destinée à recevoir la portion de vis mâle (71) qui y est insérée ; et
un élément d'entrée (73) pour permettre à une force appliquée par un piston (12) pourvu dans un cylindre (11) de faire tourner une première portion parmi la portion de vis mâle (71) et la portion de vis femelle (72) par rapport à une deuxième portion parmi la portion de vis mâle (71) et la portion de vis femelle (72) dans une direction,
quand la première portion parmi la portion de vis mâle (71) et la portion de vis femelle (72) tourne par rapport à la deuxième portion parmi la portion de vis mâle (71) et la portion de vis femelle (72) dans ladite une direction, la distance entre les portions d'extrémité de base des bras rotatifs (40) augmente, et
le mécanisme d'ajustement d'écartement (70) comprend en outre un embrayage unidirectionnel (75) pour permettre à la première portion parmi la portion de vis mâle (71) et la portion de vis femelle (72) de tourner par rapport à la deuxième portion parmi la portion de vis mâle (71) et la portion de vis femelle (72) dans ladite une direction, et pour éviter que la première portion parmi la portion de vis mâle (71) et la portion de vis femelle (72) ne tourne par rapport à la deuxième portion parmi la portion de vis mâle (71) et la portion de vis femelle (72) dans l'autre direction, le dispositif de frein (10) comprenant en outre
un élément support (77) qui supporte la première portion parmi la portion de vis mâle (71) et la portion de vis femelle (72) et attaché de manière fixe à l'un des bras rotatifs (40A), dans lequel
l'embrayage unidirectionnel (75) est interposé entre la première portion parmi la portion de vis mâle (71) et la portion de vis femelle (72) et l'élément support (77), dans lequel
la première portion parmi la portion de vis mâle (71) et la portion de vis femelle (72) comporte une protubérance (72B) qui ressort radialement vers l'extérieur, et
la protubérance (72B) comporte une surface de contact (72C) qui fait face à une surface cible de contact (77G) de l'élément support (77) et configurée pour entrer en contact avec la surface cible de contact (77G) de l'élément support (77) en direction axiale des portions de vis mâle et femelle (71, 72),
**caractérisé en ce que**
l'élément support (77) comporte un premier espace de logement (77E) pour loger l'embrayage unidirectionnel (75) et un deuxième espace de logement (77F) connecté au premier espace de logement (77E), et pour loger la protubérance (72B),
un diamètre interne du deuxième espace de logement (77F) est supérieur au diamètre interne du premier espace de logement (77E), et
la surface cible de contact (77G) est une surface échelonnée qui démarque une délimitation entre le premier espace de logement (77E) et le deuxième espace de logement (77F) .

2. Dispositif de frein (10) selon la revendication 1, dans lequel
le mécanisme d'ajustement d'écartement (70) comprend un élément élastique (82B) pour contraindre la protubérance (72B) de telle sorte que la surface de contact (72C) entre en contact avec la surface cible de contact (77G).

3. Dispositif de frein (10) selon la revendication 1 ou 2, dans lequel
la deuxième portion parmi la portion de vis mâle (71) et la portion de vis femelle (72) comporte une portion d'ajustement (71E, 71G) à une de ses portions d'extrémité pour faire tourner la deuxième portion parmi la portion de vis mâle (71) et la portion de vis femelle (72) par rapport à la première portion parmi la portion de vis mâle (71) et la portion de vis femelle (72).

4. Dispositif de frein (10) selon la revendication 3, dans lequel
la portion d'ajustement est une des portions d'ajustement (71E, 71G) pourvue dans la deuxième portion parmi la portion de vis mâle (71) et la portion de vis femelle (72) à des portions d'extrémité respectives de celles-ci.

5. Dispositif de frein (10) selon la revendication 4, dans lequel
les portions d'ajustement (71E, 71G) comprennent une première portion d'ajustement (71E) et une deuxième portion d'ajustement (71G),
la portion de vis mâle (71) comprend un corps de vis (71A) à insérer dans la portion de vis femelle (72) et une tige (71F) attachée de manière fixe au corps de vis (71A), alignée avec celui-ci et ressortant au-delà des extrémités axiales du corps de vis (71A), et
la première portion d'ajustement (71E) est pourvue sur une extrémité axiale du corps de vis (71A) qui est positionnée à l'opposé de la tige (71F), et la deuxième portion d'ajustement (71G) est pourvue sur une extrémité axiale de la tige (71F) qui est positionnée à l'opposé du corps de vis (71A).

6. Dispositif de frein (10) selon l'une quelconque des revendications 1 à 5, dans lequel
la première portion parmi la portion de vis mâle (71) et la portion de vis femelle (72) est la portion de vis femelle (72), et la deuxième portion parmi la portion de vis mâle (71) et la portion de vis femelle (72) est la portion de vis mâle (71).

7. Mécanisme d'ajustement d'écartement (70) destiné à être utilisé dans un dispositif de frein (10), le dispositif de frein (10) comprenant une paire de bras rotatifs (40), les bras rotatifs (40) comportant chacun un élément de friction (90) attaché à une portion d'extrémité de pointe de ceux-ci, les éléments de friction (90) étant configurés pour y intercaler un disque de frein (95) quand au moins l'un des bras rotatifs (40) tourne,
le mécanisme d'ajustement d'écartement (70) étant connecté aux portions d'extrémité de base des bras rotatifs (40) qui sont positionnées à l'opposé des portions d'extrémité de pointe, chacun des bras rotatifs (40) comportant un centre de rotation entre ses portions d'extrémité de base et de pointe, le mécanisme d'ajustement d'écartement (70) étant configuré pour ajuster la distance entre les portions d'extrémité de base des bras rotatifs (40), le mécanisme d'ajustement d'écartement (70) comprenant :
une portion de vis mâle (71) ;
une portion de vis femelle (72) destinée à recevoir la portion de vis mâle (71) qui y est insérée ; et
un élément d'entrée (73) pour permettre à une force appliquée par un piston (12) pourvu dans un cylindre (11) de faire tourner une première portion parmi la portion de vis mâle (71) et la portion de vis femelle (72) par rapport à une deuxième portion parmi la portion de vis mâle (71) et la portion de vis femelle (72) dans une direction, dans lequel
quand la première portion parmi la portion de vis mâle (71) et la portion de vis femelle (72) tourne par rapport à la deuxième portion parmi la portion de vis mâle (71) et la portion de vis femelle (72) dans ladite une direction, la distance entre les portions d'extrémité de base des bras rotatifs (40) augmente, et
le mécanisme d'ajustement d'écartement (70) comprend en outre un embrayage unidirectionnel (75) pour permettre à la première portion parmi la portion de vis mâle (71) et la portion de vis femelle (72) de tourner par rapport à la deuxième portion parmi la portion de vis mâle (71) et la portion de vis femelle (72) dans ladite une direction, et pour éviter que la première portion parmi la portion de vis mâle (71) et la portion de vis femelle (72) ne tourne par rapport à la deuxième portion parmi la portion de vis mâle (71) et la portion de vis femelle (72) dans l'autre direction,
le mécanisme d'ajustement d'écartement (70) comprenant en outre
un élément support (77) qui supporte la première portion parmi la portion de vis mâle (71) et la portion de vis femelle (72) et attaché de manière fixe à l'un des bras rotatifs (40A), dans lequel
l'embrayage unidirectionnel (75) est interposé entre la première portion parmi la portion de vis mâle (71) et la portion de vis femelle (72) et l'élément support (77), dans lequel
la première portion parmi la portion de vis mâle (71) et la portion de vis femelle (72) comporte une protubérance (72B) qui ressort radialement vers l'extérieur, et
la protubérance (72B) comporte une surface de contact (72C) qui fait face à une surface cible de contact (77G) de l'élément support (77) et configurée pour entrer en contact avec la surface cible de contact (77G) de l'élément support (77) en direction axiale des portions de vis mâle et femelle (71, 72),
**caractérisé en ce que**
l'élément support (77) comporte un premier espace de logement (77E) pour loger l'embrayage unidirectionnel (75) et un deuxième espace de logement (77F) connecté au premier espace de logement (77E), et pour loger la protubérance (72B),
un diamètre interne du deuxième espace de logement (77F) est supérieur au diamètre interne du premier espace de logement (77E), et
la surface cible de contact (77G) est une surface échelonnée qui démarque une délimitation entre le premier espace de logement (77E) et le deuxième espace de logement (77F) .
